# EUROPÄISCHE PATENTSCHRIFT

(11) **EP 4 497 187 B1**
(45) Veröffentlichungstag und Bekanntmachung des Hinweises auf die Patenterteilung: **01.07.2026**
(21) Anmeldenummer: 23727622.5
(22) Anmeldetag: 29.05.2023
(51) Int. Cl.: H02J 3/38, H02J 3/34, H02J 15/50

(54) **ANLAGENVERBUND UMFASSEND MINDESTENS ZWEI ELEKTROLYSEANLAGEN UND EINE STROMVERSORGUNGSQUELLE**
SYSTEM NETWORK COMPRISING AT LEAST TWO ELECTROLYSIS SYSTEMS AND A POWER SUPPLY SOURCE
RÉSEAU DE SYSTÈME COMPRENANT AU MOINS DEUX SYSTÈMES D'ÉLECTROLYSE ET UNE SOURCE D'ALIMENTATION ÉLECTRIQUE

(30) Priorität: 08.06.2022 DE 102022205818
(43) Veröffentlichungstag der Anmeldung: 29.01.2025
(73) Patentinhaber: Siemens Energy Global GmbH & Co. KG, 81739 München (DE)
(72) Erfinder: SCHUMANN, Sven, 91452 Wilhermsdorf (DE); BENDIG, Marvin, 90513 Zirndorf (DE); GECK, Ulf-André, 91074 Herzogenaurach (DE)
(86) Internationale Anmeldenummer: PCT/EP2023/064313
(87) Internationale Veröffentlichungsnummer: WO 2023/237372

(56) Entgegenhaltungen:
- EP-A1- 3 965 249
- CN-A- 114 362 215
- US-A1- 2014 021 785
- US-A1- 2023 212 765

## Beschreibung

Die Erfindung betrifft einen Anlagenverbund umfassend mindestens zwei Elektrolyseanlagen und eine Stromversorgungsquelle. Die Erfindung betrifft weiterhin eine Verwendung.

Eine Elektrolyseanlage ist eine Vorrichtung, die mit Hilfe von elektrischem Strom eine Stoffumwandlung herbeiführt (Elektrolyse). Entsprechend der Vielfalt an unterschiedlichen elektrochemischen Elektrolyseprozessen gibt es auch eine Vielzahl von Elektrolyseanlagen, wie beispielsweise eine Elektrolyseanlage für eine Wasserelektrolyse.

Wasserstoff wird heutzutage beispielsweise mittels einer Proton Exchange Membrane (PEM)-Elektrolyse, einer Anion Exchange Membrane oder einer **alkalischen Elektrolyse aus Wasser** erzeugt. Die Elektrolyseanlagen produzieren mit Hilfe elektrischer Energie Wasserstoff und Sauerstoff aus dem zugeführten Wasser. Dieser Prozess findet in einem Elektrolysestack, zusammengesetzt aus mehreren Elektrolysezellen, statt. In dem unter einer Gleichspannung (DC Spannung) stehenden Elektrolysestack wird als Edukt Wasser eingebracht, wobei nach dem Durchlauf durch die Elektrolysezellen zwei Fluidströme, bestehend aus Wasser und Gasblasen (O₂ bzw. H₂) austreten.

Aktuelle Überlegungen gehen dahin, mit überschüssiger Energie aus erneuerbaren Energiequellen in Zeiten mit viel Sonne und viel Wind, also mit überdurchschnittlicher Solarstrom- oder Windkrafterzeugung, Wertstoffe zu erzeugen. Ein Wertstoff kann insbesondere Wasserstoff sein, welcher durch Wasser-Elektrolyseanlagen erzeugt wird. Auf Basis von Wasserstoff kann beispielsweise sogenanntes Erneuerbare-Energien-Gas - auch als EE-Gas bezeichnet, hergestellt werden. Ein EE-Gas ist ein brennbares Gas, welches mit Hilfe elektrischer Energie aus erneuerbaren Quellen gewonnen wird.

Wasserstoff stellt dabei einen besonders umweltfreundlichen und nachhaltigen Energieträger dar. Er hat das einzigartige Potential Energiesysteme, Verkehr und große Teile der Chemie ohne CO₂-Emissionen zu realisieren. Damit dies gelingt, darf der Wasserstoff allerdings nicht aus fossilen Quellen stammen, sondern muss mit Hilfe von erneuerbaren Energien produziert werden. Inzwischen wird zumindest ein wachsender Anteil des aus erneuerbaren Quellen erzeugten Stroms in das öffentliche Stromnetz eingespeist. Somit kann entsprechend dem Strommix ein entsprechender Anteil grünen Wasserstoffs erzeugt werden, wenn eine Elektrolyseanlage mit Strom aus dem öffentlichen Netz betrieben wird.

Bei im industriellen Maßstab ausgeführten Elektrolysen wird der Gleichstrom überwiegend über netzgeführte Gleichrichter bereitgestellt. Bei dieser Gleichrichtung einer netzseitigen Wechselspannung können aufgrund der Funktionsweise der Gleichrichter Oberschwingungen entstehen, welche das Wechselstromnetz und/oder das Gleichstromnetz belasten können.

In der EP 3 723 254 A1 ist eine derartige Elektrolyseanlage offenbart, die an das öffentliche Stromnetz angeschlossen ist und entsprechend mit Netzstrom wird. Hierzu weist die Elektrolyseanlage eine Schaltungsanordnung auf, die vier Spulenanordnungen und vier Gleichrichter umfasst. Die ersten Spulen der Spulenanordnungen sind dabei jeweils mit der Gleichspannungsseite eines der Gleichrichter verbunden. Die Schaltungsanordnung umfasst weiterhin zwei Transformatoren, welche jeweils eine Primärwicklung sowie zwei Sekundärwicklungen aufweisen. Die Primärwicklungen der Transformatoren sind mit dem Stromnetz, z. B. einem Mittelspannungsnetz oder einem Hochspannungsnetz, verbunden. Auf diese Weise kann trotz des reduzierten Eisenanteils innerhalb der ersten Spule eine erwünschte Glättung des Gleichstroms, beziehungsweise die Dämpfung der Oberschwingungen erfolgen.

Eine Quelle für erneuerbare Energien ergibt sich aus der zunehmenden Windkraftnutzung. Insbesondere mit küstennahen, sogenannten Offshore-Windenergieanlagen lassen sich große elektrische Leistungen realisieren. Herausfordernd ist allerdings, dass eine große Distanz zu den Verbrauchern zu überwinden ist. Die Energie sollte also möglichst verlustfrei zum Verbraucher transportiert werden. Als Transportmedium und Energieträger eignet sich sehr gut Wasserstoff. Dieser kann zum Beispiel durch Pipelines in gasförmiger Form transportiert werden. Ein positiver Nebenaspekt hierbei ist, dass eine Wasserstoff-führende Pipeline gleichzeitig die Funktion eines Energiespeichers erfüllen kann, da der innere Druck in gewisssen Grenzen variiert werden kann.

Aus diesen Überlegungen heraus ist es von besonderem wirtschaftlichen Interesse, den Wasserstoff direkt am Ort der Energiegewinnung, also autark und unabhängig vom öffentlichen Netz, zu produzieren. Hierzu ist vorgeschlagen, die Elektrolyseanlagen auf Offshore-Plattformen im maritimen Bereich direkt an Offshore-Windenergieanlagen oder in deren unmittelbarer Nähe zu installieren und mit dem erzeugten Strom elektrisch zu versorgen.

Auch für das Festland wurden solche Konzepte vorschlagen, den Strom aus Onshore-Windkraftanlagen oder Fotovoltaikanlagen zumindest teilweise durch eine direkte Anbindung an und Einspeisung in eine Elektrolyseanlage unmittelbar für eine Wasserstofferzeugung zu nutzen. In all diesen Anwendungen ist die Elektrolyseanlage Teil eines so genannten Inselnetzes. Der Elektrolysestrom wird also nicht aus dem öffentlichen Netz bezogen, sondern direkt von einer Windenergieanlage oder einer PV-Anlage geliefert und in einen Elektrolyseur der Elektrolyseanlage eingespeist. Dabei kann möglicherweise noch eine Zwischenspeicherung der von einer Windenergieanlage oder einer PV-Anlage erzeugten elektrischen Energie beispielsweise in einer Batterie erfolgen. Im Gegensatz zu dem oben beschriebenen netzgeführten Betrieb bringt dies jeweils besondere Herausforderungen und Probleme hinsichtlich der elektrotechnischen Anbindung und Verschaltung der Elektrolyseanlage mit der jeweilige EE-Erzeugungsanlage mit sich, sei es eine Windenergieanlage oder eine Fotovoltaikanlage, insbesondere um einen sicheren und vor allem störungsfreien Betrieb der Elektrolysanlage in einem unmittelbaren Anlagenverbund mit der EE-Erzeugungsanlage zu gewährleisten.

Sowohl bei einem netzgeführten Betrieb als auch bei einem Inselbetrieb besteht ein großer Bedarf nach technischen Lösungen, um eine zuverlässige und zugleich kostengünstige elektrische Anbindung einer oder mehrerer Elektrolyseanlagen an den jeweiligen Stromerzeuger zu ermöglichen. Dies umso mehr, als in zunehmendem Maße sehr große und komplexe Elektrolyseanlagen oder Elektrolysesysteme mit einer Vielzahl von Elektrolyseuren gleichzeitig zu versorgen sind und an eine externe Stromquelle entsprechend anzubinden sind. Hierbei stellen sich insbesondere Fragen einer kostengünstigen Stromübertragung von der jeweiligen Stromversorgungsquelle zu den Elektrolyseanlagen, die bei diesen kombinierten Anlagen teilweise in einem komplexen Anlagenverbund zusammengeschlossen sind.

Dokument CN 114 362 215 A offenbart weiteren Stand der Technik.

Der Erfindung liegt daher die Aufgabe zugrunde, einen Anlagenverbund anzugeben, bei dem eine möglichst zuverlässige und kostengünstige elektrische Anbindung von Elektrolyseanlagen an eine Stromversorgungsquelle erreicht wird.

Diese Aufgabe wird erfindungsgemäß gelöst durch einen Anlagenverbund umfassend mindestens zwei Elektrolyseanlagen, eine Stromversorgungsquelle und eine zentrale Versorgungsleitung, wobei die zentrale Versorgungsleitung an die Sekundärseite eines Transformators angeschlossen ist, in den primärseitig Strom aus der Stromversorgungsquelle einspeisbar ist, wobei der Transformator auf eine Arbeitsfrequenz oberhalb der Netzfrequenz des öffentlichen Stromnetzes ausgelegt ist, so dass ein höherfrequentes AC-Netz gebildet ist, an das die Elektrolyseanlagen über die zentrale Versorgungsleitung angeschlossen sind, und wobei die Stromversorgungsquelle als Stromerzeuger eine Windenergieanlage aufweist, an die ein Frequenzumrichter angeschlossen ist, dessen Ausgang auf die Arbeitsfrequenz ausgelegt ist, wobei der Ausgang primärseitig an den höherfrequenten Transformator angeschlossen ist, wobei der Transformator in der Gondel der Windenergieanlage installiert ist.

Die Erfindung geht bereits von der Problemerkenntnis aus, dass sich bei einer Kombination von bisweilen verschiedenen externen Stromversorgungsquellen mit Elektrolyseanlagen zu einem Anlagenverbund Anschlussfragen sowie Fragen der effizienten Stromübertragung stellen. Dies gilt sowohl für einen Inselbetrieb als auch für einen netzgeführten Betrieb bei einem Anschluss der Elektrolyseanlagen an das öffentliche Stromnetz. Je nach Entfernung der mit einem Gleichstrom zu versorgenden Elektrolyseure einer Elektrolyseanlage zur jeweiligen Stromversorgungsquelle führt die Stromübertragung bei einer niedrigen Spannung zu einem sehr hohen Materialaufwand, z.B. der verwendeten elektrischen Leiter, um die Übertragungsverluste möglichst zu begrenzen. Vor allem bei großer räumlicher Entfernung, beispielsweise, falls etwa der Generator in einer Windenergieanlage sich hoch in der Gondel befindet und die Elektrolyseanlage am Boden in der Nähe des Turms oder auch noch in weitem Abstand angeordnet ist. Allein für dieses einfache Beispiel können leicht einige 100 m Kabelweg zu Buche schlagen, um eine Elektrolyseanlage zu versorgen und an eine Stromversorgungsquelle anzubinden. Allein die Leitungswege und der entsprechende Materialeinsatz führen zu einem signifikanten Kostenanteil für den Anschluss und Versorgung der Elektrolyseanlage. Hinzu kommen Aufwand für elektrische Einrichtungen für den Anschluss und die Übertragung der Leistung.

Als bekannte Lösungsansätze werden im industriellen Maßstab beispielsweise vorgeschlagen, die Leistungsverluste dadurch zu verringern, dass die Stromstärke reduziert und die Spannung erhöht wird. Um die Übertragungsspannung zu erhöhen, werden häufig Transformatoren eingesetzt. Diese benötigen dafür ein Wechselspannungssystem, also ein AC-Netz, welches auf einen Netzbetrieb bei auf eine Frequenz von derzeit 50 Hz bis 60 Hz ausgelegt ist. Tatsächlich werden durch die größer gewählte Übertragungsspannung die Übertragungsverluste über die Anschluss- und Versorgungsleitungen verringert. Diese Ausgestaltung bringt aber auch Nachteile mit sich, da die Transformatoren entsprechend groß, schwer und teuer sind.

Um das Anschluss- und Übertragungsproblem in einem Anlagenverbund mit einer Anzahl von Elektrolyseanlagen möglichst kostengünstig und effizient zu lösen, schlägt die Erfindung die Anbindung über ein dafür eingerichtetes höherfrequentes AC-Netz vor. Über das höherfrequente AC-Netz wird die erforderliche Übertragungsleistung von der Stromversorgungsquelle zu den Elektrolyseanlagen gebracht, so dass der Elektrolysestrom zur Verfügung steht. Die Arbeitsfrequenz des höherfrequenten AC-Netzes wird dabei gezielt oberhalb der Netzfrequenz gewählt, wozu der Transformator auf eine Arbeitsfrequenz oberhalb der Netzfrequenz des öffentlichen Netzes von 50 Hz bis 60 Hz ausgelegt ist. Die Stromversorgungsquelle speist Strom über diesen HF-Transformator in die zentrale Versorgungsleitung ein. Die Elektrolyseanlagen in dem Anlagenverbund sind an die zentrale Versorgungsleitung jeweils schlossen und beziehen die elektrische Leistung für den Elektrolyseprozess aus dem höherfrequenten AC-Zwischenkreis. Es können bedarfsweise mehrere auf dieselbe Arbeitsfrequenz oberhalb der Netzfrequenz ausgelegte HF-Transformatoren in dem AC-Zwischenkreis vorgesehen sein und entsprechend an die zentrale Versorgungsleitung angeschlossen.

Dadurch ist sehr eine vorteilhafte höherfrequente Anbindung einer beliebigen Anzahl von Elektrolyseanlagen an die Stromversorgungsquelle über die zentrale Versorgungsleitung erzielt, wobei die zentrale Versorgungsleitung als AC-Bus-Leitung in dem Anlagenverbund wirkt. Von Vorteil ist dabei neben der verlustarmen Übertragbarkeit der Leistung, dass die Größe des Transformators geringer gewählt werden kann, da die Größe bzw. der Bauraum des Transformators in etwa linear mit der Arbeitsfrequenz abnimmt. Dadurch können gegenüber herkömmlichen Anbindungen und Auslegung auf die verfügbare Netzfrequenz insbesondere Materialkosten für Leitungen und Transformatoren eingespart werden, aber auch Bauraum zur Unterbringung des Transformators. Hierdurch kann der Transformator beispielsweise nahe bei der Stromversorgungsquelle platziert oder in sonstiger Weise in den Anlagenverbund baulich integriert werden.

Die Stromversorgungsquelle weist als Stromerzeuger eine Windenergieanlage auf, an die ein Frequenzumrichter angeschlossen ist, dessen Ausgang auf die Arbeitsfrequenz ausgelegt ist, wobei der Ausgang primärseitig an den Transformator angeschlossen ist.

Auf diese Weise ist in dem Anlagenverbund über das höherfrequente AC-Netz eine Anbindung bzw. Anschluss und Versorgung der Elektrolyseanlage an eine Windenergieanlage erreicht, wobei ein Inselnetzbetrieb vorteilhaft möglich ist. Wird der Anlagenverbund in einem Inselnetz betrieben, so erfolgt keine Anbindung an das öffentliche Stromnetz. Somit ist die Netzfrequenz des öffentlichen Stromnetzes von 50 Hz bis 60 Hz unbeachtlich für die Auslegung und den Betrieb der elektrischen Komponenten im AC-Netz, etwa für die erforderliche Umrichtung, Übertragung oder Gleichrichtung. Hierdurch ist eine größere Flexibilität bei der Auslegung und Auswahl der Komponenten erreicht, insbesondere für die Wahl der Arbeitsfrequenz in der als AC-Bus ausgestalteten zentralen Versorgungsleitung im AC-Zwischenkreis.

Bei der Erfindung ist zusätzlich Integration des höherfrequenten Transformators innerhalb der Gondel der Windkraftanlage vorgesehen und besonders eröffnet zahlreiche Kostenvorteile in der Konstruktion sowie Betriebsvorteile des Anlagenverbunds.

Das Gewicht und die Größe des benötigten Transformators können infolge der Auslegung und Festlegung einer höheren Arbeitsfrequenz vorteilhaft reduziert werden. Dadurch sinkt der Materialeinsatz vor allem bezüglich Eisen und Kupfer, wodurch auch weniger Bauraum benötigt wird. Dadurch wird die Installation des hochfrequenten Transformators in der Gondel der Windenergieanlage aufgrund der Gewichtsreduktion wesentlich einfacher und ist auf dem begrenzten Bauraum innerhalb einer Gondel möglich. Durch diese Aufstellung ist der Transformator zugleich innerhalb der Gondel gut geschützt und kann vorteilhaft zusammen mit dem Frequenzumrichter Umrichter in der Gondel installiert sein. Zudem wird durch den Transformator und den höherfrequenten AC-Zwischenkreis eine für den Elektrolyseprozess sehr vorteilhafte galvanische Trennung bereitgestellt, was insbesondere mögliche elektrische Streuströme in den Anlagenteilen der Prozesstechnik der Elektrolyseanlage vermeidet bzw. reduziert.

Das Konzept mit der zentralen höherfrequenten Versorgungsleitung ist dabei einfach skalierbar und sehr flexibel hinsichtlich der Anzahl der über das höherfrequente AC-Netz versorgten Elektrolyseanlagen und der Art der Stromversorgungsquelle. Das höherfrequente AC-Netz schafft eine Entkopplung bzw. Unabhängigkeit hinsichtlich der möglichen Erzeugungsarten der in die zentrale Versorgungsleitung eingespeisten elektrischen Leistung. So kann der Anlagenverbund auf ein Inselnetzbetrieb ausgelegt sein oder aber ein Anschluss an ein öffentliches Netz ist möglich. Es sind auch vorteilhafte Kombinationen möglich und ein Bezug aus verschiedenen Stromversorgungsquellen, wie etwa aus Windenergie, Fotovoltaik oder Wasserkraft.

In besonders bevorzugter Ausgestaltung des Anlagenverbunds sind die Elektrolyseanlagen parallel zueinander geschaltet, wobei eine Elektrolyseanlage über eine jeweilige Anschlussleitung an die zentrale Versorgungsleitung angeschlossen ist.

Hierdurch kommen die Vorteile des AC-Bus Prinzips mit der zentralen Versorgungsleitung zu Geltung, welches eine jeweilige unabhängige Anschlussleitung für eine Elektrolyseanlage ermöglicht und diese auch vorsieht. In dem Anlagenverbund ist das höherfrequente AC-Versorgungsnetz bedarfsweise flexibel ausbaufähig und um weitere Elektrolyseanlagen erweiterbar, eventuell unter Anpassung der Einspeiseleistung von der Stromversorgungsquelle.

In bevorzugter Ausgestaltung ist in eine Anschlussleitung ein Anschlusstransformator geschaltet, der auf die Arbeitsfrequenz ausgelegt ist. Dadurch ist bei Anschluss der Anschlussleitung an die zentrale Versorgungsleitung das AC-Netz um eine Anschlussmöglichkeit erweitert und für den Betrieb bei der Arbeitsfrequenz ausgelegt, so dass elektrische Wechselstromleistung bei der Arbeitsfrequenz über den Anschlusstransformator aus der zentralen höherfrequenten Versorgungsleitung in die Anschlussleitung übertragbar ist. Diese Leistung steht für weitere Zwecke der Elektrolyse in der über die Anschlussleitung angeschlossenen Elektrolyseanlage zur Verfügung. Dabei kann je nach Anwendungsfall und Anzahl der Anschlussleitungen und zu versorgenden Elektrolyseanlagen eine entsprechende Anzahl von höherfrequenten Anschlusstransformatoren vorgesehen sein. Beispielsweise wird im Regelfall in jeder Anschlussleitung ein jeweiliger Anschlusstransformator vorgesehen sein, um elektrische Leistung aus dem AC-Netz in die jeweilige Anschlussleitung auszukoppeln. Die Auslegung des Anschlusstransformators kann individuell an die geforderte Abnahmeleistung in der jeweiligen Anschlussleitung flexibel angepasst sein.

In weiter bevorzugter Ausgestaltung ist in der Anschlussleitung ein Gleichrichter vorgesehen, der an die Sekundärseite des Anschlusstransformators angeschlossen ist.

Dabei ist es möglich, dass in dem aufgebauten höherfrequenten AC-Netz vorteilhaft beliebig viele höherfrequente Anschlusstransformatoren vorgesehen sind. Ein Anschlusstransformator kann dabei in jeweils einen oder auch in mehrere Gleichrichter einspeisen und damit die Versorgung der Elektrolyseanlagen bewirken. Die Sekundärseite ist entsprechend für mehrere Anschlussmöglichkeiten ausgelegt. Der Gleichrichter wandelt den eingangsseitig eingekoppelten höherfrequenten Wechselstrom aus dem AC-Netz in einen Gleichstrom um, so dass der Elektrolyse-Gleichstrom ausgangsseitig über die Anschlussleitung der Elektrolyseure der Elektrolyseanlage zuführbar ist. Der Gleichrichter kann dabei schaltungstechnisch auch als Teil der Elektrolyseanlage angesehen werden und in diese integriert sein, wobei der Gleichrichter wechselstromseitig über einen Anschlusstransformator an das AC-Netz angeschlossen ist.

Vorzugsweise ist in dem Anlagenverbund ein Elektrolyseur an den Gleichrichter angeschlossen. Somit ist eine Versorgung eines Elektrolyseurs in einer Elektrolyseanlage mit Elektrolyse-Gleichstrom der gewünschten Spannungsebene erzielt. Dabei kann eine Elektrolyseanlage auch mehrere Elektrolyseure umfassen, die jeweils ein Elektrolysemodul oder mehrere Elektrolysemodule aufweisen.

Vorzugsweise umfasst die Stromversorgungsquelle als Stromerzeuger eine Fotovoltaikanlage auf, an die ein Wechselrichter angeschlossen ist, dessen Ausgang auf die Arbeitsfrequenz ausgelegt ist, wobei der Ausgang primärseitig an einen Transformator angeschlossen ist, der auf eine Arbeitsfrequenz oberhalb der Netzfrequenz des öffentlichen Stromnetzes ausgelegt ist.

Mit dieser Ausgestaltung ist in dem Anlagenverbund über das höherfrequente AC-Netz eine vorteilhafte Anbindung bzw. Anschluss und Versorgung der Elektrolyseanlage zusätzlich mit aus einer Fotovoltaikanlage gewonnenem Strom erreicht. Dabei ist auch ein Inselnetzbetrieb basierend auf Fotovoltaik möglich. In analoger Betrachtung und entsprechend den Vorteilen, wie bei dem oben beschriebenen Anschluss der Elektrolyseanlage an eine Windenergieanlage, erfolgt in einem Inselnetz ein von der öffentlichen Netzfrequenz unabhängiger Betrieb, was besonders große Auslegungsflexibilität ermöglicht und autarke Einsatzmöglichkeiten abseits des öffentlichen Stromnetzes. Somit ist die Netzfrequenz des öffentlichen Stromnetzes von 50 Hz bis 60 Hz unbeachtlich für die Auslegung und den Betrieb der elektrischen Komponenten im AC-Netz, hier für die erforderliche Wechselrichtung des PV-Gleichstroms in einen Wechselstrom mit der Arbeitsfrequenz, der Einspeisung in die zentrale Versorgungsleitung der Übertragung oder Gleichrichtung. Im Zusammenhang mit Fotovoltaik kann mit dem Wechselrichter unmittelbar ausgangsseitig ein Wechselstrom auf der Arbeitsfrequenz erzeugt werden, der direkt in die zentrale Versorgungsleitung einspeisbar ist. Somit entfällt gegenüber der Anbindung einer Windenergieanlage mit Wechselstromerzeugung am Generator der Umrichter, d.h. die Kombination aus Gleichrichter und Wechselrichter. Es genügt ein entsprechend ausgelegter Wechselrichter.

In weiter bevorzugter Ausgestaltung umfasst die Stromversorgungsquelle als Stromerzeuger eine Wasserkraftanlage mit einem Generator, dessen Ausgangsfrequenz auf die Arbeitsfrequenz ausgelegt ist, wobei der Generator primärseitig an einen Transformator angeschlossen ist, der auf eine Arbeitsfrequenz oberhalb der Netzfrequenz des öffentlichen Stromnetzes ausgelegt ist.

Vorteilhaft kann bei einer Wasserkraftanlage ein Generator verwendet werden, der bereits unmittelbar am Ausgang eine entsprechend höhere Frequenz als die Netzfrequenz ausgibt, d.h. der Generator der Wasserkraftanlege ist auf die Arbeitsfrequenz des AC-Zwischenkreis ausgelegt. Damit kann im Vergleich zu einer Windenergieanlage auf einen DC-Zwischenkreis verzichtet werden, der durch die Zusammenschaltung eines Gleichrichters und eines Wechselrichters bei einer Frequenzumrichtung notwendig ist. Aus dieser geringeren Komplexität und Komponentenzahl können sich bei Anbindung an eine Wasserkraftanlage zusätzliche Kostenvorteile ergeben, wobei auch hier ein Inselnetzbetrieb möglich ist. Über die Polzahl und die Rotationsgeschwindigkeit ergibt sich die Ausgangsfrequenz des Generators. Insbesondere Generatoren für Wasserkraftanlagen sind daher für eine höherfrequente Anbindung und frequenzgenaue Einkopplung in das AC-Netz geeignet, da sie - zumindest in gewissen konstruktiven Grenzen - gut an die Anforderungen im Einsatzfall anpassbar sind.

In bevorzugter Ausgestaltung umfasst die Stromversorgungsquelle das öffentliche Stromnetz, wobei ein Frequenzumrichter vorgesehen ist, dessen Ausgang auf die Arbeitsfrequenz ausgelegt und an die zentrale Versorgungsleitung angeschlossen ist. Dabei ist es auch möglich, dass in dem Anlagenverbund die Stromerzeugungsquelle aus Kombinationen verschiedener Stromerzeuger, wie etwa Windenergieanlage, Fotovoltaikanlage oder Wasserkraftanlage gebildet ist bzw. gespeist ist.

Der Anlagenverbund ist damit vorteilhaft für eine bedarfsweise Anbindung an das öffentliche Stromnetz ausgestaltet und eingerichtet. Somit ist ein Netzbetrieb als auch ein Inselbetrieb möglich. Soll eine Anbindung an das öffentliche Stromnetz erfolgen, so es möglich und auch zu bevorzugen, dass der Frequenzumrichter als ein zentraler Frequenzumrichter, z.B. als zentrale Umrichterstation, mit entsprechender Leistungsfähigkeit ausgeführt ist, um Komponenten zu sparen und einen zentralen Anschlusspunkt für die Abnahme von Netzstrom vorzusehen. Dies kann beispielweise dergestalt umgesetzt sein, dass ein Gleichrichter und ein Wechselrichter in kombinierter Schaltungsanordnung vorgesehen sind, so dass am Netzanschlusspunkt zunächst eine Gleichrichtung der Netzfrequenz durch den Gleichrichter erfolgt und anschließend eine Wechselrichtung in die höherfrequente Arbeitsfrequenz des AC-Zwischenkreises. Diese Art der zentralen Anbindung an das öffentliche Stromnetz über einen zentralen Frequenzumrichter kann beispielsweise besonders einfach am Netzanschlusspunkt einer Windenergieanlage oder eines Windparks realisiert werden.

In bevorzugter Ausgestaltung ist der Transformator als Hochfrequenz-Transformator ausgestaltet, der auf eine Arbeitsfrequenz von größer als 80 Hz ausgelegt ist. Somit ist dem AC-Netz auf der zentralen Versorgungsleitung ein Strom mit der Arbeitsfrequenz einspeisbar.

Vorzugsweise weist der Anlagenverbund ein auf eine Arbeitsfrequenz von 80 Hz bis 1000 Hz, insbesondere von 200 Hz bis 500 Hz, ausgelegtes höherfrequentes AC-Netz auf. Der Transformator ist zur Einspeisung des Wechselstroms der Arbeitsfrequenz in die zentrale Versorgungsleitung jeweils entsprechend ausgelegt.

Bei der Wahl der Arbeitsfrequenz und der Auslegung der Komponenten für das AC-Netz ist zu beachten, dass als Arbeitsfrequenz eine Frequenz gewählt wird, die für eine effiziente und verlustarme Übertragung nicht zu hoch liegen sollte. Ansonsten steigen die kapazitiven Verluste entlang der zentralen Versorgungsleitung zu stark an. Die optimale Frequenz als Arbeitsfrequenz hängt daher von der Leitungslänge und Leitungskapazität der zentralen Versorgungsleitung ab und ist entsprechend anpassbar. Vorzugsweise ist der Anlagenverbund technisch am vielversprechendsten in einer Inselnetzanwendung umzusetzen mit im Allgemeinen begrenzten Distanzen und Leitungswegen von höchstens wenigen hundert Metern, typischerweise im Bereich von 50 m bis 150 m. Hierdurch ist ein vom öffentlichen Netz unabhängiger Inselnetzbetrieb in dem Anlagenverbund möglich, und eine unmittelbare Nutzung von Strom ausschließlich aus erneuerbaren Quellen für die Elektrolyse, so dass grüner Wasserstoff gebildet ist.

Ein weiterer, besonders bevorzugter Aspekt, betrifft die Verwendung eines höherfrequenten AC-Netzes in dem beschriebenen Anlagenverbund, wobei eine Anzahl von Elektrolyseanlagen an eine zentrale Versorgungsleitung angeschlossen werden, und wobei in die zentrale Versorgungsleitung ein höherfrequenter Wechselstrom durch einen in der Gondel der Windenergieanlage installierten Transformator eingespeist wird.

Bei der Verwendung wird ein höherfrequenter Wechselstrom durch den Transformator mit einer Arbeitsfrequenz oberhalb der Netzfrequenz bereitgestellt. Der Transformator wird primärseitig über den Frequenzumrichter von dem Wechselstromgenerator der Windenergieanlage als Stromversorgungsquelle versorgt.

Das Gewicht und die Größe des benötigten Transformators können infolge der Auslegung und Festlegung einer höheren Arbeitsfrequenz vorteilhaft reduziert werden. Dadurch sinkt der Materialeinsatz vor allem bezüglich Eisen und Kupfer, wodurch auch weniger Bauraum benötigt wird. Dadurch wird insbesondere die Installation des hochfrequenten Transformators in der Gondel einer Windenergieanlage aufgrund der Gewichtsreduktion wesentlich einfacher und ist auf dem begrenzten Bauraum innerhalb einer Gondel möglich. Zudem wird durch den Transformator und den höherfrequenten AC-Zwischenkreis eine für den Elektrolyseprozess sehr vorteilhafte galvanische Trennung bereitgestellt, was insbesondere mögliche elektrische Streuströme in den Anlagenteilen der Prozesstechnik der Elektrolyseanlage vermeidet bzw. reduziert.

Vorteile und vorteilhafte Ausgestaltungen des Anlagenverbunds der Erfindung sind als Vorteile und vorteilhafte Ausgestaltungen der entsprechenden Verwendung anzusehen und umgekehrt.

Weitere Vorteile, Merkmale und Einzelheiten der Erfindung ergeben sich aus der nachfolgenden Beschreibung bevorzugter Ausführungsbeispiele sowie anhand der Zeichnung. Die vorstehend in der Beschreibung genannten Merkmale und Merkmalskombinationen sowie die nachfolgend in der Figurenbeschreibung genannten und/oder in den einzigen Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Ausführungsbeispiele der Erfindung werden anhand einer Zeichnung näher erläutert. Hierin zeigen schematisch und stark vereinfacht:
- FIG 1: einen Anlagenverbund mit einer höherfrequenten Anbindung an eine Windenergieanlage;
- FIG 2: einen Anlagenverbund mit einer höherfrequenten Anbindung an eine Fotovoltaikanlage.

Gleiche Bezugszeichen haben in den Figuren die gleiche Bedeutung.

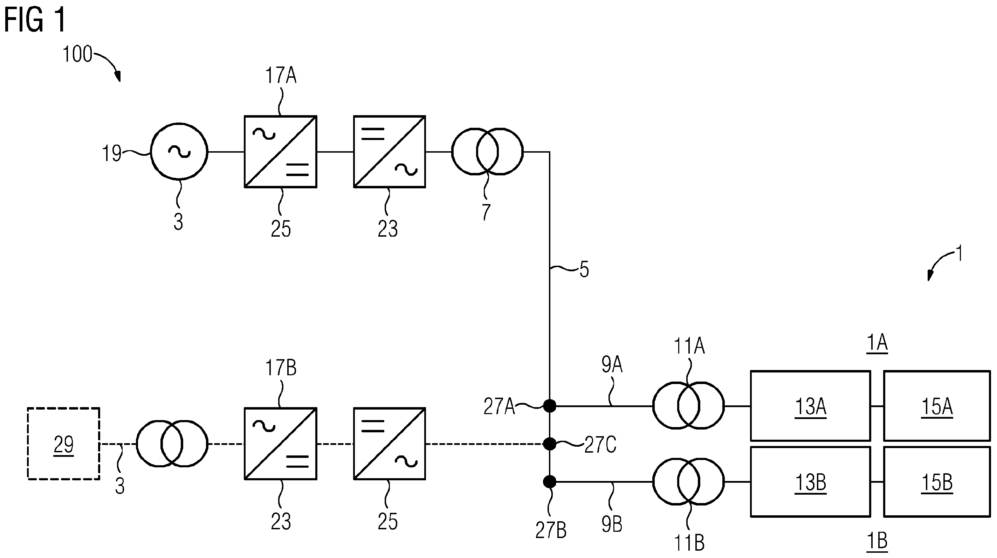

In FIG 1 ist ein Anlagenverbund 100 gemäß der Erfindung dargestellt. Der Anlagenverbund 100 umfasst ein Elektrolysesystem 1 mit zwei Elektrolyseanlagen 1A, 1B sowie eine an das Elektrolysesystem 1 angeschlossene Stromversorgungsquelle 3. Die Stromversorgungsquelle 3 weist als Stromerzeuger eine Windenergieanlage 19 auf, die als Erneuerbare-Energie-Anlage (EE-Anlage) und Quelle für grünen Strom dient. Die Versorgung des Elektrolysesystems 1 mit Elektrolysestrom erfolgt über eine zentrale Versorgungsleitung 5.

Dabei ist jede der Elektrolyseanlagen 1A, 1B des Elektrolysesystems 1 über eine jeweilige Anschlussleitung 9A, 9B an einen Versorgungsanschluss 27A, 27B an die zentrale Versorgungsleitung 5 angeschlossen, so dass eine Parallelschaltung der Elektrolyseanlagen 1A, 1B realisiert ist. Dabei weist die Elektrolyseanlage 1A wenigstens einen Elektrolyseur 15A auf und die Elektrolyseanlage 1B wenigstens einen Elektrolyseur 15B. Die Elektrolyseure 15A, 15B können wahlweise als PEM-Elektrolyseur, als AEM-Elektrolyseur (AEM: Anion-Exchange-Membran) oder als alkalischer Elektrolyseur ausgestaltet sein, wobei auch Kombinationen möglich sind.

Auf Seiten der Stromversorgungsquelle 3 ist der Windenergieanlage 19 ausgangsseitig an einem Generator der Windenergieanlage 19 ein Frequenzumrichter 17A nachgeschaltet. Der Frequenzumrichter 17A weist einen Gleichrichter 25 und einen dem Gleichrichter 25 nachgeschalteten Wechselrichter 23 auf. Somit kann ein durch den Generator der Windenergieanlage 19 erzeugter Wechselstrom in einen Wechselstrom höherer Frequenz als die Netzfrequenz umgerichtet und die ein höherfrequenter Wechselstrom in die zentrale Versorgungsleitung 5 eingespeist werden. Zur Aufnahme der einspeisten Leistung ist in der zentralen Versorgungsleitung 5 ein Transformator 7 vorgesehen, in den primärseitig der in der Windenergieanlage 19 erzeugte Strom über den Wechselrichter 23 einspeisbar bzw. einkoppelbar ist. Die zentrale Versorgungsleitung 5 ist an die Sekundärseite des Transformators 7 angeschlossen. Die Arbeitsfrequenz des Transformators 7 und des Wechselrichters 23 sind auf eine Frequenz oberhalb der Netzfrequenz des öffentlichen Stromnetzes ausgelegt und aufeinander abgestimmt, so dass die gewünschte Einkopplung und Übertragung eines höherfrequenten Wechselstroms sichergestellt sind. Der Transformator 7 ist hierzu als Hochfrequenz-Transformator (HF-Transformator) ausgestaltet und beispielsweise auf eine Arbeitsfrequenz von größer als 80 Hz, beispielsweise zwischen 200 Hz und 500 Hz ausgelegt. Durch diese Verschaltung ist ein höherfrequentes AC-Netz gebildet und bereitgestellt, oder ein AC-Zwischenkreis, der die zentrale Versorgungsleitung 5 aufweist. Die zentrale Versorgungsleitung 5 wirkt dabei sehr vorteilhaft als zentrale AC-Bus-Leitung, durch die eine höherfrequente Anbindung eines Elektrolysesystems 1 ermöglicht ist. Der Transformator 7 ist zusammen mit dem Generator und dem Frequenzumrichter 17A innerhalb der Gondel der Windenergieanlage 19 angeordnet und baulich in die Gondel integriert.

Für einen auf die Arbeitsfrequenz abgestimmten Anschluss und Stromversorgung der Elektrolyseanlagen 1A, 1B ist in die Anschlussleitung 9A ein Anschlusstransformator 11A geschaltet und in die Anschlussleitung 9B entsprechend ein Anschlusstransformator 11B. Dabei ist die Primärseite, also der Eingang des Anschlusstransformators 11A über einen Versorgungsanschluss 27A und analog die Primärseite des Anschlusstransformators 27B über einen Versorgungsanschluss 27B an die zentrale Versorgungsleitung 5 angeschlossen. Sekundärseitig sind die Anschlusstransformatoren 27A, 27B mit dem jeweiligen Gleichrichter 13A, 13B verbunden, so dass für die Elektrolyse in den Elektrolyseuren 15A, 15B ein jeweiliger Gleichstrom bereitgestellt ist. Im Betrieb des Anlagenverbunds 100 wird auf der zentralen Versorgungsleitung 5 ein höherfrequentes AC-Netz bereitgestellt und dazu verwendet, um die an die zentrale Versorgungsleitung 5 in Parallelschaltung angeschlossenen Elektrolyseanlagen 1A, 1B mit Elektrolysestrom zu versorgen. Durch den Einsatz eines höherfrequenten Transformators 7 kann ein höherfrequenter Wechselstrom bereitgestellt und in die zentrale Versorgungsleitung 5 eingespeist werden. Dabei ist der Anlagenverbund flexibel auslegbar bzw. erweiterbar, indem beispielsweise weitere Elektrolyseanlagen 1A, 1B angeschlossen werden. Vorteilhaft ist mit dem Anlagenverbund 100 ein netzunabhängiger Inselnetzbetrieb möglich.

Allerdings ist auf Seiten der Stromversorgungsquelle 3 alternativ oder zusätzlich auch ein Anschluss an das öffentliche Stromnetz möglich. Hierzu ist, wie in FIG 1 durch eine gestrichelte Linie veranschaulicht, ein Versorgungsanschluss 27C in der zentralen Versorgungsleitung 5 vorgesehen. Ein Frequenzumrichter 17B umfassend einen Wechselrichter 23 und einen dem Wechselrichter nachgeschalteten Gleichrichter 25 sorgen für eine Umrichtung des aus dem öffentlichen Stromnetz 29 bei der Netzfrequenz ausgekoppelten Wechselstroms auf die höhere Arbeitsfrequenz. Somit ist bedarfsweise auch Strom aus dem öffentlichen Stromnetz 29 in die zentrale Versorgungsleitung 27C frequenzangepasst einspeisbar und für die Nutzung für Elektrolysezwecke in dem Elektrolysesystem 1 bereitgestellt. Von Vorteil erweist sich hierbei, dass durch die Bereitstellung einer Anbindung an das öffentliche Stromnetz 29 beispielsweise Ersatzbedarfe gedeckt werden, etwa wenn die Windenergieanlage 23 wartungsbedingt nicht oder nur sehr eingeschränkt Strom produziert, oder bei Phasen einer Dunkelflaute, so dass eine Backup-Lösung vorgehalten ist, um eine möglichst kontinuierliche Versorgung und einen gleichmäßigen Betrieb der Elektrolyseanlagen 1A, 1B zur Wasserstoffproduktion zu gewährleisten. Gegebenenfalls können auch bei einer Unterversorgung mit elektrischer AC-Leistung auf der zentralen Versorgungsleitung 5 eine oder mehrere Elektrolyseanlagen 15A, 15B in Teillast betrieben werden oder vom AC-Netz genommen werden. Zuletzt kann über den Netzanschluss 27C überschüssige elektrische Energie, die von den Elektrolyseuren 15A, 15B nicht abgenommen werden kann, in das öffentliche Netz 29 eingespeist werden. In einem reinen Inselnetzbetrieb ist mangels eines verfügbaren Anschlusses an ein öffentliches Netz 29 in der Regel ein Ersatzbedarf nicht zu besorgen.

Mit dem Konzept eines höherfrequenten AC-Netzes, das über die zentrale Versorgungsleitung 5 bereitgestellt wird, ist somit in dem Anlagenverbund 100 ein höherfrequenter AC-Zwischenkreis bereitgestellt, durch den zudem auch eine vorteilhafte galvanische Entkopplung realisiert ist. Primärseitig ist an den Transformator 7 der Wechselrichter 23 geschaltet. Sekundärseitig ist an den Transformator 7 in den Anschlussleitungen 9A, 9B ein jeweiliger Gleichrichter 13A, 13B geschaltet. Über die Gleichrichter 13A, 13B werden die Elektrolyseure 15A, 15B mit einem Gleichstrom, dem Elektrolysestrom versorgt. Die galvanische Trennung der Elektrolyseanlage 1A, 1B erfolgt über den jeweiligen Anschlusstransformator 11A, 11B in der entsprechenden Anschlussleitung 9A, 9B, was nachteilige Streuströme in der Prozesstechnik der Elektrolyse reduziert.

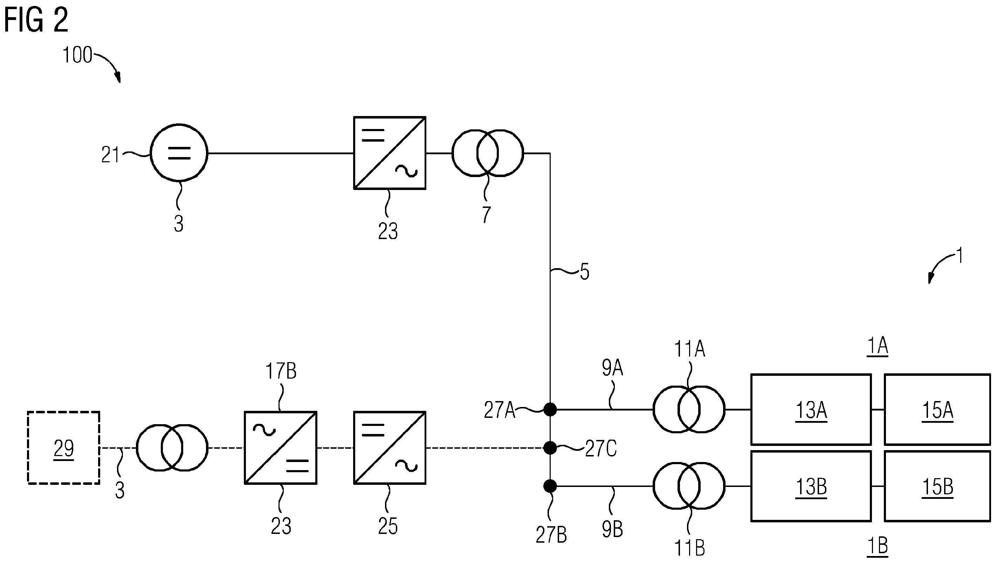

In einem weiteren Ausführungsbeispiel eines erfindungsgemäßen Anlagenverbunds 100 ist in FIG 2 eine alternative Stromversorgungsquelle 3 zur Versorgung des Elektrolysesystems 1 mit Gleichstrom gezeigt. Hierbei weist die Stromversorgungsquelle 3 eine Fotovoltaikanlage 21 auf, mit einer Vielzahl nicht näher dargestellter PV-Module. Die Fotovoltaikanlage 21 kann beispielsweise als großflächige und leistungsfähige Freifeldanlage - bevorzugt in sonnenreichen Regionen - ausgestaltet sein, so dass PV-Leistungen von 10 MW elektrischer Leistung und darüber hinaus für die Elektrolyse zur Verfügung stehen. Auf Seiten des Elektrolysesystems 1 ist ein völlig analoges Anlagenkonzept wie in FIG 1 angewendet und entsprechende Anlagenkomponenten, d.h. die elektrische Anbindung und Versorgung der Elektrolyseanlagen 1A, 1B erfolgt über die zentrale Versorgungsleitung 5. Um dies zu erreichen, ist die Elektrolyseanlage 1A an den Versorgungsanschluss 27A und entsprechend die Elektrolyseanlage 1B an den Versorgungsanschluss 27B elektrisch angeschlossen.

Um bezüglich der Fotovoltaikanlage 21 auf eine gewünschte und vorteilhafte Wechselspannungsebene für die Einspeisung in die zentrale Versorgungsleitung 5 zu kommen, ist in dem Beispiel der FIG 2 am DC-Ausgang der Fotovoltaikanlage 21 ein Wechselrichter 23 angeschlossen. Der Wechselrichter 23 ist auf die Arbeitsfrequenz ausgelegt und liefert am Ausgang die höherfrequente Wechselspannung. Die Ankopplung und Einspeisung der Leistung der Fotovoltaikanlage 21 in die zentrale Versorgungsleitung 5 erfolgt über den Transformator 7. Zur Übertragung und Abnahme der elektrischen Leistung durch das Elektrolysesystem 1 sind die Elektrolyseanlagen 1A, 1B - wie oben näher beschrieben - über eine jeweilige Anschlussleitung 9A, 9B an die zentrale Versorgungsleitung 5 angeschlossen. Durch die Anschlusstransformatoren 11A, 11B ist zudem eine vorteilhafte galvanische Entkopplung erzielt. Eine Einspeisung von Netzstrom aus dem öffentlichen Stromnetz 23 in die zentrale Versorgungsleitung 5 ist bei der PV-Anwendung ebenso möglich in analoger Ausgestaltung wie zu FIG 1 beschrieben. Ebenso ist über die zentrale Versorgungsleitung 5 eine Einspeisung von Strom aus der Fotovoltaikanlage 21 in das öffentliche Stromnetz 23 möglich.

Mit der Erfindung ist ein Anlagenverbund 100 angegeben, mit dem eine elektrische Leistung insbesondere aus einer erneuerbaren Stromversorgungsquelle 3 in ein Elektrolysesystem 1 mit einer Anzahl von Elektrolyseanlagen 1A, 1B einspeisbar ist, so dass 100% grüner Wasserstoff in den Elektrolyseuren 15A, 15B erzeugbar ist. Dies erfolgt sehr vorteilhaft in dem beschriebenen Anlagenverbund 100 umfassend mindestens zwei Elektrolyseanlagen 1A, 1B, eine Stromversorgungsquelle 3 und die zentrale Versorgungsleitung 5, die als zentrale AC-Busleitung ausgebildet ist und einen Wechselstrom auf einer Arbeitsfrequenz oberhalb der Netzfrequenz des öffentlichen Netzes bereitstellt. Mithin wird ein höherfrequentes AC-Netz in dem Anlagenverbund 100 vorgesehen und verwendet, wobei eine Anzahl von Elektrolyseanlagen 1A, 1B an eine zentrale Versorgungsleitung 5 angeschlossen und betrieben wird, wobei in die zentrale Versorgungsleitung 5 ein höherfrequenter Wechselstrom eingespeist wird. Es ist in einem besonders einfachsten Anwendungsfall alternativ auch möglich, dass in einer Anwendung eines Anlagenverbunds 100 nur eine Elektrolyseanlagen 1A, 1B an der zentralen Versorgungsleitung 5 elektrisch angeschlossen ist sowie entsprechend mit Elektrolysestrom versorgbar und betreibbar. Das System bzw. der Anlagenverbund 100 ist somit bedarfsweise modular erweiterbar oder auch reduzierbar und an eine jeweilige Anzahl von Elektrolyseanlagen 1A, 1B flexibel anpassbar. Die zentrale Versorgungsleitung 5, die ein zentrales AC-Netz bildet, kann entsprechend auf die AC-Netzleistung bzw. Abnahmeleistung der zu versorgenden Elektrolyseanlagen 1A, 1B ausgelegt werden. Die Anzahl der Elektrolyseanlagen 1A, 1B ist dabei prinzipiell nicht begrenzt und richtet sich nach der Einspeiseleistung in das zentrale AC-Netz und der Abnahmeleistung der Elektrolyseanlagen 1A, 1B.

## Patentansprüche

1. Anlagenverbund (100) umfassend mindestens zwei Elektrolyseanlagen (1A, 1B), eine Stromversorgungsquelle (3) und eine zentrale Versorgungsleitung (5), wobei die zentrale Versorgungsleitung (5) an die Sekundärseite eines Transformators (7) angeschlossen ist, in den primärseitig Strom aus der Stromversorgungsquelle (3) einspeisbar ist, wobei der Transformator (7) auf eine Arbeitsfrequenz oberhalb der Netzfrequenz des öffentlichen Stromnetzes ausgelegt ist, so dass ein höherfrequentes AC-Netz gebildet ist, an das die Elektrolyseanlagen (1A, 1B) über die zentrale Versorgungsleitung (5) angeschlossen sind, und wobeidie Stromversorgungsquelle (3) als Stromerzeuger eine Windenergieanlage (19) aufweist, an die ein Frequenzumrichter (17A) angeschlossen ist, dessen Ausgang auf die Arbeitsfrequenz ausgelegt ist, wobei der Ausgang primärseitig an den höherfrequenten Transformator (7) angeschlossen ist, wobei der Transformator (7) in der Gondel der Windenergieanlage (19) installiert ist.

2. Anlagenverbund (100) nach Anspruch 1, bei dem die Elektrolyseanlagen (1A, 1B) parallel zueinander geschaltet sind, wobei eine Elektrolyseanlage (1A, 1B) über eine jeweilige Anschlussleitung (9A, 9B) an die zentrale Versorgungsleitung (5) angeschlossen ist.

3. Anlagenverbund (100) nach Anspruch 2, bei dem in eine Anschlussleitung (9A, 9B) ein Anschlusstransformator (11A, 11B) geschaltet ist, der auf die Arbeitsfrequenz ausgelegt ist.

4. Anlagenverbund (100) nach Anspruch 3, bei dem in der Anschlussleitung (9A, 9B) ein Gleichrichter (13A, 13B) vorgesehen ist, der an die Sekundärseite des Anschlusstransformators (11A, 11B) angeschlossen ist.

5. Anlagenverbund (100) nach Anspruch 4, bei dem ein Elektrolyseur (15A, 15B) an den Gleichrichter (13A, 13B) angeschlossen ist.

6. Anlagenverbund (100) nach einem der vorhergehenden Ansprüche, bei dem die Stromversorgungsquelle (3) als Stromerzeuger eine Fotovoltaikanlage (21) umfasst, an die ein Wechselrichter (23) angeschlossen ist, dessen Ausgang auf die Arbeitsfrequenz ausgelegt ist, wobei der Ausgang primärseitig an einen Transformator (7) angeschlossen ist, der auf eine Arbeitsfrequenz oberhalb der Netzfrequenz des öffentlichen Stromnetzes ausgelegt ist.

7. Anlagenverbund (100) nach einem der vorhergehenden Ansprüche, bei dem die Stromversorgungsquelle (3) als Stromerzeuger eine Wasserkraftanlage mit einem Generator umfasst, dessen Ausgangsfrequenz auf die Arbeitsfrequenz ausgelegt ist, wobei der Generator primärseitig an einen Transformator (7) angeschlossen ist, der auf eine Arbeitsfrequenz oberhalb der Netzfrequenz des öffentlichen Stromnetzes ausgelegt ist.

8. Anlagenverbund (100) nach einem der vorhergehenden Ansprüche, bei dem die Stromversorgungsquelle (3) das öffentliche Stromnetz umfasst, wobei ein Frequenz-umrichter (17B) vorgesehen ist, dessen Ausgang auf die Arbeitsfrequenz ausgelegt und an die zentrale Versorgungsleitung (5) angeschlossen ist.

9. Anlagenverbund (100) nach einem der vorhergehenden Ansprüche, bei dem der Transformator (7) als HF-Transformator ausgestaltet ist, der insbesondere auf eine Arbeitsfrequenz von größer als 80 Hz ausgelegt ist.

10. Anlagenverbund (100) nach einem der vorhergehenden Ansprüche mit einem auf eine Arbeitsfrequenz von 80 Hz bis 1000 Hz, insbesondere von 200 Hz bis 500 Hz, ausgelegten höherfrequenten AC-Netz.

11. Verwendung eines höherfrequenten AC-Netzes in einem Anlagenverbund (100) nach einem der vorhergehenden Ansprüche, wobei eine Anzahl von Elektrolyseanlagen (1A, 1B) an eine zentrale Versorgungsleitung (5) angeschlossen wird, wobei in die zentrale Versorgungsleitung (5) ein höherfrequenter Wechselstrom eingespeist wird.

12. Verwendung nach Anspruch 11, bei der ein höherfrequente Wechselstrom durch einen in der Gondel der Windenergieanlage (19) installierten Transformator (7) mit einer Arbeitsfrequenz oberhalb der Netzfrequenz bereitgestellt wird.

## Claims

1. A plant network (100) comprising at least two electrolysis plants (1A, 1B), a power supply source (3) and a central supply line (5), wherein the central supply line (5) is connected to the secondary side of a transformer (7) into which a current from the power supply source (3) can be fed on the primary side, wherein the transformer (7) is configured for an operating frequency above the grid frequency of the public power grid, so that a higher-frequency AC grid is formed to which the electrolysis plants (1A, 1B) are connected via the central supply line (5), and whereinthe power supply source (3) has a wind turbine (19) as a power generator, to which a frequency converter (17A) is connected, the output of which is configured for the operating frequency, wherein the output is, on the primary side, connected to the higher-frequency transformer (7), wherein the transformer (7) is installed in the nacelle of the wind turbine (19).

2. The plant network (100) according to claim 1, wherein the electrolysis plants (1A, 1B) are connected in parallel to one another, wherein an electrolysis plant (1A, 1B) is connected to the central supply line (5) via a respective connecting line (9A, 9B).

3. The plant network (100) according to claim 2, wherein a connection transformer (11A, 11B) which is configured for the operating frequency is connected in a connection line (9A, 9B).

4. The plant network (100) according to claim 3, wherein a rectifier (13A, 13B) is provided in the connection line (9A, 9B), which is connected to the secondary side of the connection transformer (11A, 11B).

5. The plant network (100) according to claim 4, wherein an electrolyser (15A, 15B) is connected to the rectifier (13A, 13B).

6. The plant network (100) according to any one of the preceding claims, in which the power supply source (3) comprises a photovoltaic plant (21) as a power generator, to which an inverter (23) is connected, the output of which is configured for the operating frequency, wherein the output is, on the primary side, connected to a transformer (7) configured for an operating frequency above the grid frequency of the public power grid.

7. The plant network (100) according to any one of the preceding claims, in which the power supply source (3) comprises a hydroelectric power plant with a generator as a power generator, the output frequency of which is configured for the operating frequency, wherein the generator is, on the primary side, connected to a transformer (7) configured for an operating frequency above the grid frequency of the public power grid.

8. The plant network (100) according to any one of the preceding claims, in which the power supply source (3) comprises the public power grid, wherein a frequency converter (17B) is provided, the output of which is configured for the operating frequency and is connected to the central supply line (5).

9. The plant network (100) according to any one of the preceding claims, in which the transformer (7) is designed as a HF-transformer, which in particular is configured for an operating frequency higher than 80 Hz.

10. The plant network (100) according to any one of the preceding claims, with a higher-frequency AC grid configured for an operating frequency of 80 Hz to 1000 Hz, in particular from 200 Hz to 500 Hz.

11. A use of a higher-frequency AC grid in a plant network (100) according to any one of the preceding claims, wherein a number of electrolysis plants (1A, 1B) are connected to a central supply line (5), wherein higher-frequency alternating current is fed into the central supply line (5).

12. The use according to claim 11, in which a higher-frequency alternating current is provided by a transformer (7) installed in the nacelle of the wind turbine (19) with an operating frequency above the grid frequency.

## Revendications

1. Ensemble d'installations (100) comprenant au moins deux installations d'électrolyse (1A, 1B), une source d'alimentation électrique (3) et une ligne d'alimentation centrale (5), dans lequel la ligne d'alimentation centrale (5) est raccordée au côté secondaire d'un transformateur (7), dans lequel du courant provenant de la source d'alimentation électrique (3) peut être injecté côté primaire, dans lequel le transformateur (7) est conçu pour une fréquence de travail supérieure à la fréquence de réseau du réseau électrique public, de sorte qu'un réseau CA à haute fréquence est formé, auquel les installations d'électrolyse (1A, 1B) sont raccordées via la ligne d'alimentation centrale (5), et dans lequel la source d'alimentation électrique (3) présente, en tant que générateur de courant, une éolienne (19) à laquelle est raccordé un convertisseur de fréquence (17A), dont la sortie est conçue pour la fréquence de travail, dans lequel la sortie est raccordée côté primaire au transformateur à haute fréquence (7), le transformateur (7) étant installé dans la nacelle de l'éolienne (19).

2. Ensemble d'installations (100) selon la revendication 1, dans lequel les installations d'électrolyse (1A, 1B) sont montées en parallèle les unes aux autres, dans lequel une installation d'électrolyse (1A, 1B) est raccordée à la ligne d'alimentation centrale (5) via une ligne de raccordement (9A, 9B) respective.

3. Ensemble d'installations (100) selon la revendication 2, dans lequel un transformateur de raccordement (11A, 11B) est monté dans une ligne de raccordement (9A, 9B), lequel transformateur est conçu pour la fréquence de travail.

4. Ensemble d'installations (100) selon la revendication 3, dans lequel un redresseur (13A, 13B) est prévu dans la ligne de raccordement (9A, 9B), lequel est raccordé au côté secondaire du transformateur de raccordement (11A, 11B).

5. Ensemble d'installations (100) selon la revendication 4, dans lequel un électrolyseur (15A, 15B) est raccordé au redresseur (13A, 13B).

6. Ensemble d'installations (100) selon l'une des revendications précédentes, dans lequel la source d'alimentation électrique (3) comprend, en tant que générateur de courant, une installation photovoltaïque (21) à laquelle est raccordé un onduleur (23) dont la sortie est conçue pour la fréquence de travail, dans lequel la sortie est raccordée côté primaire à un transformateur (7) qui est conçu pour une fréquence de travail supérieure à la fréquence de réseau du réseau électrique public.

7. Ensemble d'installations (100) selon l'une des revendications précédentes, dans lequel la source d'alimentation électrique (3) comprend, en tant que générateur de courant, une centrale hydroélectrique avec un générateur dont la fréquence de sortie est conçue pour la fréquence de travail, dans lequel le générateur est raccordé côté primaire à un transformateur (7) qui est conçu pour une fréquence de travail supérieure à la fréquence de réseau du réseau électrique public.

8. Ensemble d'installations (100) selon l'une des revendications précédentes, dans lequel la source d'alimentation électrique (3) comprend le réseau électrique public, dans lequel un convertisseur de fréquence (17B) est prévu, dont la sortie est conçue pour la fréquence de travail et est raccordée à la ligne d'alimentation centrale (5).

9. Ensemble d'installations (100) selon l'une des revendications précédentes, dans lequel le transformateur (7) est conçu comme un transformateur HF, lequel est conçu en particulier pour une fréquence de travail supérieure à 80 Hz.

10. Ensemble d'installations (100) selon l'une des revendications précédentes avec un réseau CA à haute fréquence conçu pour une fréquence de travail de 80 Hz à 1000 Hz, en particulier de 200 Hz à 500 Hz.

11. Utilisation d'un réseau CA à haute fréquence dans un ensemble d'installations (100) selon l'une des revendications précédentes, dans laquelle un nombre d'installations d'électrolyse (1A, 1B) est raccordé à une ligne d'alimentation centrale (5), dans laquelle un courant alternatif à haute fréquence est injecté dans la ligne d'alimentation centrale (5).

12. Utilisation selon la revendication 11, dans laquelle un courant alternatif à haute fréquence est fourni par un transformateur (7) installé dans la nacelle de l'éolienne (19) avec une fréquence de travail supérieure à la fréquence de réseau.
